# EUROPEAN PATENT SPECIFICATION

(11) **EP 3 217 028 B1**
(45) Date of publication and mention of the grant of the patent: **19.08.2020**
(21) Application number: 17159753.7
(22) Date of filing: 07.03.2017
(51) Int. Cl.: F16B 33/00, F16J 15/00

(54) **SEALED HOUSING**
ABGEDICHTETES GEHÄUSE
BOÎTIER SCELLÉ

(30) Priority: 07.03.2016 US 201662304344 P
(43) Date of publication of application: 13.09.2017
(73) Proprietor: Essence Security International Ltd., 4672530 Herzlia Pituach (IL)
(72) Inventor: MERON, Sergey, 4237690 Netanya (IL); NEKHANEVICH, Igal, 7528083 Rishon-LeZion (IL)
(74) Representative: Kramer, Dani

(56) References cited:
- WO-A1-02/089280
- DE-U1-202006 017 170

## Description

### BACKGROUND

The present invention, in some embodiments thereof, relates to a housing for a device and, more specifically, but not exclusively, to a sealed housing for a device.

At times there is a need to install an object, for example a device, in a location exposed to environment conditions that could harm the object. Such harmful conditions may be a result of weather, for example humidity, water and dust; or characteristics of the location, for example dust in a building site or humidity in a bathroom. In some locations, a device is installed by driving a bolt through the device's housing, either through an existing opening or creating a new opening in the device's housing, and then through a surface of the location for the purpose of mounting the device on the surface. In such environments, particles such as dust and water could penetrate the housing via the existing opening or the new opening, and components of the device could come in contact with the particles and be damaged by the particles.

Publication DE 20 2006 017170 U1 (KATHEREIN WERKE KG [DE]) 13 December 2017 *(2007-12-13)* says: Housing and / or wall portion with a sealing means for at least one of a screw (27) interspersed housing or wall breakthrough (5), said screw (27) comprises the screw shank (27c) or the screw thread (27b) superior larger diameter having the screw head (27a) characterized by the following further features
- the housing and / or wall portion (5) is overlapping with the housing and / or wall portion (5), serving to prevent corrosion cladding layer (17) surrounded and / or molded,
- in the case and / or wall portion (5) is provided a screw opening (25) for fixing the housing and / or wall portion (5) passing through it at a further mounting portion of the at least one screw (27),
- there is provided a stop (37), via which the maximum screw-in depth of the at least one screw (27) is limited,
   - the stop (37) is in a screw opening (25) surrounding the recess (33) in the cladding layer (17) and / or in a surrounding the screw hole (25) ...

### SUMMARY

The foregoing and other objects are achieved by the features of the independent claims. Further implementation forms are apparent from the dependent claims, the description and the figures.

Aspects and embodiment of the present invention are set out in the appended claims. These and other aspects and embodiments of the invention are also described herein.

According to a first aspect of the present invention, a sealed housing assembly comprises a bolt; a housing body having at least one surface area shaped to receive said bolt, wherein the bolt is delivered to the at least one surface area, so there is at least one persistent gap between the housing body and the bolt; and at least one shape adapting layer disposed on the at least one surface area such that the at least one shape adapting layer contorts to conform to a shape of the bolt. The at least one surface area is internal to the housing body and the at least one shape adapting layer is disposed on the at least one internal surface of the housing body. The bolt is a self-tapping screw and the self-tapping screw is driven through the at least one shape adapting layer from inside the housing bodyto mount the sealed housing housing to a location surface, leaving no gap between the at least one shape adapting layer and the screw.

According to a second aspect of the present invention, a method of creating a sealed housing assembly comprises: providing a housing body having at least one surface area shaped to receive a bolt for mounting the sealed housing assembly to a location surface, such that when the bolt is delivered to the at least one surface area there is at least one persistent gap between the housing body and the bolt; and disposing at least one shape adapting layer on the at least one surface area such that the at least one shape adapting layer contorts to conform to a shape of the bolt. The at least one surface area is internal to the housing body and the at least one shape adapting layer is disposed on the at least one internal surface of the housing body. The bolt is a self-tapping screw and the self-tapping screw is driven through the at least one shape adapting layer from inside the housing to mount the sealed housing assembly to a location surface, leaving no gap between the at least one shape adapting layer and the screw. The shape adapting layer contorting to conform to a shape of the bolt preserves the seal of the housing when driving a bolt through the housing's body.

With reference to the first aspect, in a first possible implementation of the first aspect the at least one persistent gap between the body and the bolt is created by delivering the bolt through the body, for example by driving a self-tapping screw through the body. Forming the at least one persistent gap by driving the bolt through the body allows for a smaller gap than if the at least one persistent gap is formed during manufacturing of the housing's body, thus easier to seal.

With reference to the first aspect, in a second possible implementation of the first aspect the at least one surface area comprises an opening created when manufacturing the body. This reduces the amount of cracks formed when driving the bolt through the housing's body.

With reference to the first aspect, in a third possible implementation of the first aspect the at least one shape adapting layer is made of a material having a Shore hardness value less than 80 on Shore scale A and more than 60 on Shore scale A. A layer made of such a material is soft enough to contort to conform to a shape of the bolt, and at the same time tough enough to hold the conforming shape.

With reference to the first aspect, in a fourth possible implementation of the first aspect the at least one shape adapting layer is made of a material having elongation strain. Having elongation strain allows the at least one shape adapting layer to contort to conform to a shape of the bolt.

With reference to the first aspect, in a fifth possible implementation of the first aspect the at least one shape adapting layer is made of a material member of a set of materials comprising: ethylene propylene diene monomer (M-class) rubber (EPDM rubber), Polyurethane (PU), Thermoplastic elastomers (TPE), Thermoplastic polyurethane (TPU) and Room Temperature Vulcanization silicone (RTV silicone). These are common soft materials.

With reference to the first aspect, in a sixth possible implementation of the first aspect the body is made of a material having a Shore hardness value of at least 60 on Shore scale D. Housings made of such materials provide mechanical protection to components inside the housing.

With reference to the first aspect, in a seventh possible implementation of the first aspect the body is made of a material member of a second set of materials comprising: Polycarbonate/Acrylonitrile Butadiene Styrene (PC/ABS) alloy and Chi Mei 5 Polycarbonate 540 with ultraviolet (UV) stabilizer. These are common tough material.

With reference to the first aspect, in an eighth possible implementation of the first aspect the at least one shape adapting layer is disposed only on the at least one surface area shaped to receive a bolt. Covering only surfaces prone to crack requires using less material, thus reducing costs of manufacturing.

With reference to the first aspect, in a ninth possible implementation of the first aspect body comprises a plurality of members. The at least one shape adapting layer is disposed only on the at least one surface area shaped to receive a bolt and on one or more surfaces connecting two or more of the plurality of members. Surfaces connecting between one or more members of a body typically require sealing. Limiting the shape adapting layer to only surfaces known to require sealing requires using less material, thus reducing costs of manufacturing.

With reference to the first and second aspects, in a first possible implementation of the first and second aspects the at least one shape adapting layer is over-molded on the at least one surface area. Over-molding results in a single structure that is strong and rigid on the outside yet soft and flexible on the inside.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Any feature in one aspect of the invention may be applied to other aspects of the invention, in any appropriate combination. In particular, method aspects may be applied to apparatus, and vice versa. As used herein, means plus fraction features may be expressed alternatively in terms of their corresponding structure, such as a suitably programmed processor and associated memory.

Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1A is a schematic illustration of a screw driven through a housing body, according to some embodiments of the present invention;
FIG. 1B is a schematic illustration of a screw driven though a housing body and a shape adapting layer disposed on the body, according to some embodiments of the present invention;
FIG. 2 is a schematic illustration of an exemplary shape adapting layer disposed on a housing's back cover, according to some embodiments of the present invention; and
FIG. 3 is a flow diagram of an optional flow of operations according to some embodiments of the present invention.

### DETAILED DESCRIPTION

The present invention, in some embodiments thereof, relates to a housing for a device and, more specifically, but not exclusively, to a sealed housing for a device.

Some objects, for example objects comprising electrical, optical or other sensitive components, could be damaged if the sensitive components come in contact with harmful particles such as dust, water and other solid or fluid substances. When an object comprising sensitive components, for example a device comprising electrical and optical components, is installed in a location exposed to environment conditions, the device may malfunction or cease to function when the electrical and optical components come in contact with harmful particles in the environment of the object. Presence of such harmful particles in the environment of the object may be a result of weather, for example humidity, water and dust; or characteristics of the location, for example dust in a building site or humidity in a bathroom. For example, illumination devices, security devices and any other electrical and optical devices are sensitive to harmful particles coming in contact with electrical and optical components of the devices. Such devices used outdoors are at risk of being damaged by the environment conditions.

A possible method of installing in a location a device having a housing is by driving a bolt through the housing's body and through a surface of the location for the purpose of mounting the device on the surface. A nail and a screw are examples of a bolt. In some embodiments, after driving the bolt through the housing's body there is a gap between the housing's body and the bolt. The bolt may be driven through an existing opening in the housing's body, for example an opening created when manufacturing the housing's body. In some embodiments the existing opening may have a diameter greater than a diameter of the bolt, for example to provide clearance for easy screw insertion. In such embodiments there is a gap between the bolt and the housing's body. In some embodiments where an opening is made to fit a bolt that is a screw, one or more gaps exist due to the screw's spiral nature. In some embodiments the housing is initially sealed and the device is installed by driving through the housing's body a self-tapping bolt, i.e. a bolt that drills its own hole while being driven through the housing's body, thus creating a new opening in the housing's body. In such embodiments, when the housing's body is made of a tough material, for example a metal or a solid plastic polymer such as Polycarbonate/Acrylonitrile Butadiene Styrene (PC/ABS) alloy, and the bolt is a screw, for example a self-tapping screw, the screw's spiral nature causes creation of one or more gaps between the housing's body and the screw.

In some embodiments where there are one or more gaps between the bolt and the housing's body, the one or more gaps break the housing's seal, and harmful particles may penetrate the object housing through the one or more gaps.

There is a need to install a device having a housing, without breaking the housing's seal and without leaving gaps between the housing's body and a bolt.

A possible solution is for the housing to have an extension for the purpose of mounting the device on the surface. In such housings, driving a bolt through the housing at the extension does not break the housing's seal. However, using such a housing increases the dimensions of the housing. This may increase the dimensions of a required area of the surface for mounting the device as well as costs derived from the housing's dimensions such as cost of material and cost of packaging.

A second possible solution is to use an adhesive to mount the device on the surface. Using this solution allows leaving the device's housing sealed, but is limited in that not all locations have a surface suitable for using an adhesive. Some adhesives require applying pressure to the device until the adhesive is dry; some adhesives require surface preparation such as sanding the surface or cleaning the surface. These requirements increase the time needed for installing the device and may also require a person installing the device using the adhesive to be specifically trained in using the adhesive. In some locations it may be difficult to apply pressure to the device. In addition, strong and weather resistant adhesives are typically more expensive than a bolt.

The present invention, in some embodiments thereof, retains the housing's seal by disposing at least one shape adapting layer over at least one area of the housing's body internal to the housing. In these embodiments, the device is installed by driving a bolt through the housing's body and the at least one shape adapting layer at the at least one area where the at least one shape adapting layer is disposed. When the bolt is driven through the at least one shape adapting layer, the at least one shape adapting layer contorts to wrap around the bolt and seal the housing by covering the one or more gaps between the bolt and the housing's body. In such embodiments there is no need to increase the dimensions of the housing to prevent breaking the housing's seal. In addition, in such embodiments the device is mounted to the surface using bolts. Bolts are typically cheap and readily available, and mounting a device on a surface using a bolt does not require unique skills.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

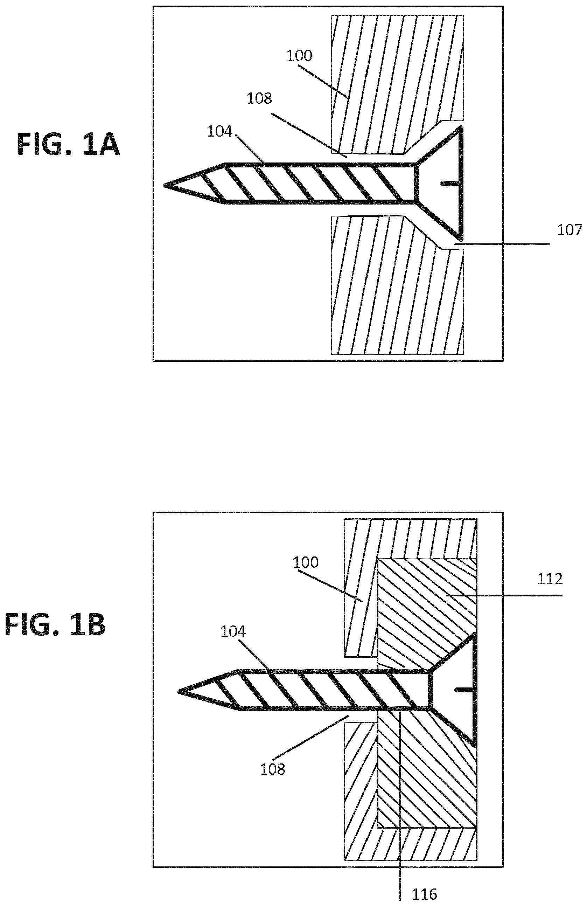

Reference is now made to FIG. 1A, showing a schematic illustration of a screw driven through a rigid housing's body, according to some examples of the present disclosure which do not fall under the scope of the claims. In some such examples, there is a need to drive a bolt through a housing's body 100, for the purpose of mounting the housing to a surface. In some examples the bolt is a screw 104. The housing may enclose a device. In some examples the device is an electrical device. In some other examples the device is an optical device. An illumination device and a security device are examples of devices.

Shore hardness scales are a common set of scales for measuring hardness of materials. In these embodiments, the housing's body is a rigid housing's body, made of a tough material having a Shore hardness value of at least 60 on Shore scale D, for example Polycarbonate/Acrylonitrile Butadiene Styrene (PC/ABS) and Chi Mei 5 Policarbonate 540 with ultraviolet (UV) stabilizer. In some embodiments the housing's body is made of a material having high flexural strength, resisting deformation under load. In some embodiments the housing's body is made of a material having high tensile strength and/or high compressive strength, resisting break under pulling and/or compressing force.

In some embodiments of the present invention, when the screw is driven in to the rigid housing's body there are one or more persistent gaps 108 between the screw and the rigid housing's body. Harmful solid and fluid particles, for example oil, water and dust, may penetrate the housing through the one or more gaps. In some embodiments, one or more micro cracks, having a width of several microns, are formed in the rigid housing's body by driving the screw driven in to the rigid housing's body. Such cracks may widen over time.

In some embodiments an opening 107 is created in the rigid housing's body when the rigid housing's body is manufactured. In some other embodiments a person installing the device drills the opening in the rigid housing's body prior to delivering the bolt through the rigid housing's body. In other embodiments, for example when the bolt is a self-tapping screw, the opening is created by driving the bolt into the rigid housing's body.

Reference is now made to FIG. 1B, showing a schematic illustration of a screw driven though a rigid housing's body and a shape adapting layer disposed on the rigid housing's body, according to some embodiments of the present invention. In such embodiments, at least one shape adapting layer 112 is disposed on an internal surface of the rigid housing's body. The screw may be driven through the at least one shape adapting layer from inside the housing. In such embodiments the at least one shape adapting layer contorts to conform to a shape of the screw and wraps the screw, leaving no gap 116 between the at least one shape adapting layer and the screw. This prevents harmful particles from penetrating into the housing via the one or more persistent gaps (108). In some embodiments, the at least one shape adapting layer contorts to completely fill the one or more gaps.

Optionally, the at least one shape adapting layer is made of a soft material having a Shore hardness value less than 80 on Shore scale A and more than 60 on Shore scale A. In some embodiments the at least one shape adapting layer is made out of a material member of a set of materials comprising: ethylene propylene diene monomer (M-class) rubber (EPDM rubber), Polyurethane (PU), Thermoplastic elastomers (TPE), Thermoplastic polyurethane (TPU) and Room Temperature Vulcanization silicone (RTV silicone). The at least one shape adapting layer may be made of a material having elongation strain.

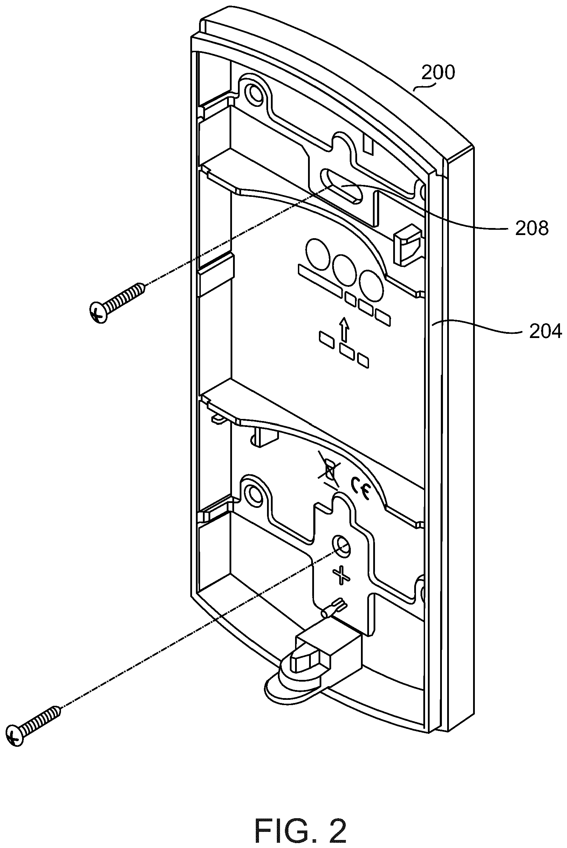

In some embodiments, a housing's body comprises a back cover. Reference is now made to FIG. 2, showing a schematic illustration of an exemplary shape adapting layer 204 disposed on a housing's body's back cover 200, according to some embodiments of the present invention. In some such embodiments there is at least one area 208 for receiving a bolt delivered through the shape adapting layer and the back cover for the purpose of mounting the housing on a location surface. In such embodiments the shape adapting layer is disposed on an internal surface of the back cover. In some embodiments the back cover and the shape adapting layer are created having one or more recesses designating the one or more areas for receiving the bolt. In some other embodiments the back cover is created having one or more openings designating the one or more areas for receiving the bolt. In some embodiments having a plurality of areas for receiving the bolt, the plurality of areas are covered by a continuous shape adapting layer. In other such embodiments, the plurality of areas are covered by a plurality of shape adapting layers.

In some embodiments having at least one shape adapting layer, the at least one shape adapting layer has a variable thickness. In some embodiments the at least one shape adapting layer's thickness varies in conformance with the housing's body's shape. Optionally, the at least one shape adapting layer's thickness varies to fill recesses in the housing's body. In some embodiments, the at least one shape adapting layer covers part of the housing's body's surface. Optionally, the part of the housing's body's surface covered by the at least one shape adapting layer includes at least one of the at least one area for receiving a bolt. In some embodiments the part of the housing's body's surface covered by the at least one shape adapting layer consists of the at least one area for receiving a bolt. In some embodiments where the housing comprises a plurality of members, the part of the housing's body's surface covered by the at least one shape adapting layer consists of the at least one area for receiving a bolt and one or more surfaces between two or more of the plurality of members.

In some embodiments, the at least one shape adapting layer is disposed on the housing's body by an over-molding / co-molding process. In some embodiments the at least one shape adapting layer is disposed on the housing's body using an adhesive. In other embodiments, the at least one shape adapting layer is pressed on the housing's body. In some embodiments, part of the at least one shape adapting layer is compressed into one or more recesses in the housing's body. Optionally, compressing part of the at least one shape adapting layer into one or more recesses in the housing's body keeps the at least one shape adapting layer attached to the housing's body.

There exist ingress protection (IP) specification for environmental protection of enclosures around electronic equipment, for example code IP67 set forth by the International Electrotechnical Commission (IEC). In some embodiments, the at least one shape adapting layer is created having certain dimensions such that a device in a housing having the at least one shape adapting layer complies with a certain IP specification.

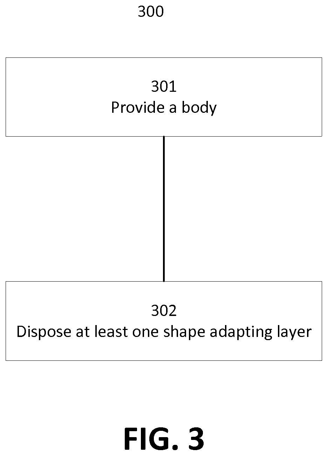

Reference is now made to FIG. 3, showing a flow diagram of an optional flow of operations 300 according to some embodiments of the present invention. In such embodiments, manufacturing a sealed housing comprises providing 301 a body having at least one surface area internal to the sealed housing. The at least one surface area may be shaped to receive a bolt for mounting the sealed housing to a location surface. In such embodiments when the bolt is delivered to the at least one surface area there is at least one persistent gap between the body and the bolt. Next (302), at least one shape adapting layer is disposed on the at least one surface area. The at least one shape adapting layer contorts to conform to a shape of the bolt, sealing a second gap created between the at least one shape adapting layer and the bolt upon delivering the bolt through the at least one shape adapting layer.

The descriptions of the various embodiments of the present invention have been presented for purposes of illustration, but are not intended to be exhaustive or limited to the embodiments disclosed. Many modifications and variations will be apparent to those of ordinary skill in the art. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant tough materials and soft materials will be developed and the scope of the terms "tough materials" and "soft materials" are intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

In addition, citation or identification of any reference in this application shall not be construed as an admission that such reference is available as prior art to the present invention. To the extent that section headings are used, they should not be construed as necessarily limiting.

It will be understood that the invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A sealed housing assembly, comprising:
a bolt;
a housing body (100) having at least one surface area shaped to receive said bolt (104), wherein said bolt is delivered to said at least one surface area, so there is at least one persistent gap (108) between said housing body and said bolt; and
at least one shape adapting layer (112) disposed on said at least one surface area such that said at least one shape adapting layer contorts to conform to a shape of said bolt;
**characterized by**:
said at least one surface area being internal to said housing body and said at least one shape adapting layer being disposed on said at least one internal surface of said housing body;
wherein said bolt is a self-tapping screw and said self-tapping screw is driven through said at least one shape adapting layer from inside said housing body to mount said sealed housing assembly to a location surface, leaving no gap between said at least one shape adapting layer and said screw.

2. The sealed housing assembly of claim 1, wherein the bolt drills its own hole while being driven through the housing body.

3. The sealed housing assembly of claim 1 or 2, wherein said at least one surface area comprises an opening (107) created when manufacturing said housing body.

4. The sealed housing assembly of any preceding claim, wherein said at least one shape adapting layer (112) is over-molded on said at least one surface area.

5. The sealed housing assembly of any preceding claim, wherein said at least one shape adapting layer (112) is made of a material having a Shore hardness value less than 80 on Shore scale A and more than 60 on Shore scale A.

6. The sealed housing assembly of any preceding claim, wherein said at least one shape adapting layer (112) is made of a material having elongation strain.

7. The sealed housing assembly of any preceding claim, wherein said at least one shape adapting layer (112) is made of a material member of a set of materials comprising: ethylene propylene diene monomer (M-class) rubber (EPDM rubber), Polyurethane (PU), Thermoplastic elastomers (TPE), Thermoplastic polyurethane (TPU) and Room Temperature Vulcanization silicone (RTV silicone).

8. The sealed housing assembly of any preceding claim, wherein said housing body (100) is made of a material having a Shore hardness value of at least 60 on Shore scale D.

9. The sealed housing assembly of any preceding claim, wherein said housing body (100) is made of a material member of a second set of materials comprising: Polycarbonate/Acrylonitrile Butadiene Styrene (PC/ABS) alloy and Chi Mei 5 Polycarbonate 540 with ultraviolet (UV) stabilizer.

10. The sealed housing assembly of any preceding claim, wherein said at least one shape adapting layer (112) is disposed only on said at least one surface area shaped to receive a bolt (104).

11. The sealed housing assembly of any preceding claim, wherein said housing body (100) comprises a plurality of members; and
wherein said at least one shape adapting layer (112) is disposed only on said at least one surface area shaped to receive a bolt (104) and on one or more surfaces connecting two or more of said plurality of members.

12. A method (300) of creating a sealed housing assembly, comprising:
providing (301) a housing body (100) having at least one surface area shaped to receive a bolt (104) for mounting said sealed housing assembly to a location surface, such that when said bolt is delivered to said at least one surface area there is at least one persistent gap (108) between said housing body and said bolt; and
disposing (302) at least one shape adapting layer (112) on said at least one surface area such that said at least one shape adapting layer contorts to conform to a shape of said bolt;
**characterized by**:
said at least one surface area being internal to said housing body and said at least one shape adapting layer being disposed on said at least one internal surface of said housing body;
wherein said bolt is a self-tapping screw and said self-tapping screw is driven through said at least one shape adapting layer from inside said housing body to mount said sealed housing assembly to a location surface, leaving no gap between said at least one shape adapting layer and said screw.

13. The method of claim 12, wherein said disposing (302) at least one shape adapting layer (112) on said at least one surface is by over-molding said at least one shape adapting layer on said at least one surface area.

## Patentansprüche

1. Versiegelte Gehäuseanordnung, die Folgendes umfasst:
einen Bolzen;
einen Gehäusekörper (100) mit mindestens einem Oberflächenbereich, der so geformt ist, dass er den genannten Bolzen (104) aufnimmt; wobei der genannte Bolzen dem genannten mindestens einen Oberflächenbereich so zugeführt wird, dass zwischen dem genannten Gehäusekörper und dem genannten Bolzen mindestens eine dauerhafte Lücke (108) besteht; und
mindestens eine Formanpassungsschicht (112), die auf dem genannten mindestens einen Oberflächenbereich angeordnet ist, so dass sich die genannte mindestens eine Formanpassungsschicht verformt, um sich an eine Form des genannten Bolzens anzupassen;
**dadurch gekennzeichnet dass**:
der genannte mindestens eine Oberflächenbereich innerhalb des genannten Gehäusekörpers liegt und die genannte mindestens eine Formanpassungsschicht auf der genannten mindestens einen Innenfläche des genannten Gehäusekörpers angeordnet ist;
wobei der genannte Bolzen eine selbstschneidende Schraube ist und die genannte selbstschneidende Schraube durch die genannte mindestens eine Formanpassungsschicht aus dem Inneren des genannten Gehäusekörpers herausgetrieben wird, um die genannte versiegelte Gehäuseanordnung an einer Aufstellungsfläche zu montieren, wobei keine Lücke zwischen der genannten mindestens eine Formanpassungsschicht und der genannten Schraube verbleibt.

2. Versiegelte Gehäuseanordnung nach Anspruch 1, wobei der Bolzen sein eigenes Loch bohrt, während er durch den Gehäusekörper getrieben wird.

3. Versiegelte Gehäuseanordnung nach Anspruch 1 oder 2, wobei der genannte mindestens eine Oberflächenbereich eine Öffnung (107) umfasst, die beim Herstellen des genannten Gehäusekörpers erzeugt wird.

4. Versiegelte Gehäuseanordnung nach einem der vorhergehenden Ansprüche, wobei die genannte mindestens eine Formanpassungsschicht (112) über dem genannten mindestens einen Oberflächenbereich geformt ist.

5. Versiegelte Gehäuseanordnung nach einem der vorhergehenden Ansprüche, wobei die genannte mindestens eine Formanpassungsschicht (112) aus einem Material mit einem Shore-Härtewert von weniger als 80 auf der Shore-Skala A und mehr als 60 auf der Shore-Skala A besteht.

6. Versiegelte Gehäuseanordnung nach einem der vorhergehenden Ansprüche, wobei die genannte mindestens eine Formanpassungsschicht (112) aus einem Material mit Längungsdehnung besteht.

7. Versiegelte Gehäuseanordnung nach einem der vorhergehenden Ansprüche, wobei die genannte mindestens eine Formanpassungsschicht (112) aus einem Materialelement eines Satzes von Materialien besteht, die Folgendes umfassen: Kautschuk aus Ethylen-Propylen-Dien-Monomer (M-Klasse) (EPDM-Kautschuk), Polyurethan (PU), thermoplastische Elastomere (TPE), thermoplastisches Polyurethan (TPU) und Vulkanisationssilikon bei Raumtemperatur (RTV-Silikon).

8. Versiegelte Gehäuseanordnung nach einem der vorhergehenden Ansprüche, wobei der genannte Gehäusekörper (100) aus einem Material mit einem Shore-Härtewert von mindestens 60 auf der Shore-Skala D besteht.

9. Versiegelte Gehäuseanordnung nach einem der vorhergehenden Ansprüche, wobei der genannte Gehäusekörper (100) aus einem Materialelement eines zweiten Satzes von Materialien besteht, die Folgendes umfassen: eine Polycarbonat/Acrylnitril-Butadien-Styrol- (PC/ABS) Legierung und Chi Mei 5-Polycarbonat 540 mit Ultraviolett-(UV) Stabilisator.

10. Versiegelte Gehäuseanordnung nach einem der vorhergehenden Ansprüche, wobei die genannte mindestens eine Formanpassungsschicht (112) nur auf dem genannten mindestens einen Oberflächenbereich angeordnet ist, der zur Aufnahme eines Bolzens (104) geformt ist.

11. Versiegelte Gehäuseanordnung nach einem der vorhergehenden Ansprüche, wobei der genannte Gehäusekörper (100) mehrere Elemente umfasst; und
wobei die genannte mindestens eine Formanpassungsschicht (112) nur auf dem genannten mindestens einen Oberflächenbereich, der zur Aufnahme eines Bolzens (104) geformt ist, und auf einer oder mehreren Oberflächen, die zwei oder mehr der genannten Vielzahl von Elemente verbinden, angeordnet ist.

12. Verfahren (300) zum Erzeugen einer versiegelten Gehäuseanordnung, das Folgendes umfasst:
Bereitstellen (301) eines Gehäusekörpers (100) mit mindestens einem Oberflächenbereich, der so geformt ist, dass er einen Bolzen (104) zur Montage der genannten versiegelten Gehäuseanordnung an einer Aufstellungsfläche aufnimmt, so dass, wenn der genannte Bolzen dem genannten mindestens einen Oberflächenbereich zugeführt wird, zwischen dem genannten Gehäusekörper und dem genannten Bolzen mindestens eine dauerhafte Lücke (108) besteht; und
Anordnen (302) mindestens einer Formanpassungsschicht (112) auf dem genannten mindestens einen Oberflächenbereich, so dass sich die genannte mindestens eine Formanpassungsschicht verformt, um sich an eine Form des genannten Bolzens anzupassen;
**dadurch gekennzeichnet dass**:
der genannte mindestens eine Oberflächenbereich innerhalb des genannten Gehäusekörpers liegt und die genannte mindestens eine Formanpassungsschicht auf der genannten mindestens einen Innenfläche des genannten Gehäusekörpers angeordnet ist;
wobei der genannte Bolzen eine selbstschneidende Schraube ist und die genannte selbstschneidende Schraube durch die genannte mindestens eine Formanpassungsschicht aus dem Inneren des genannten Gehäusekörpers herausgetrieben wird, um die genannte versiegelte Gehäuseanordnung an einer Aufstellungsfläche zu montieren, wobei keine Lücke zwischen der genannten mindestens eine Formanpassungsschicht und der genannten Schraube verbleibt.

13. Verfahren nach Anspruch 12, wobei die genannte Anordnung (302) mindestens einer Formanpassungsschicht (112) auf der genannten mindestens einen Oberfläche durch Überformen der genannten mindestens einen Formanpassungsschicht auf dem genannten mindestens einen Oberflächenbereich erfolgt.

## Revendications

1. Ensemble boîtier scellé, comprenant :
un boulon ;
un corps de boîtier (100) ayant au moins une région superficielle façonnée pour recevoir ledit boulon (104), ledit boulon étant amené sur ladite au moins une région superficielle, de sorte qu'il y ait au moins un espace persistant (108) entre ledit corps de boîtier et ledit boulon ; et
au moins une couche d'adaptation de forme (112) disposée sur ladite au moins une région superficielle de sorte que ladite au moins une couche d'adaptation de forme se torde pour s'adapter à une forme dudit boulon ;
**caractérisé par** :
ladite au moins une région superficielle est interne audit corps de boîtier et ladite au moins une couche d'adaptation de forme est disposée sur ladite au moins une surface interne dudit corps de boîtier ;
ledit boulon étant une vis autotaraudeuse et ladite vis autotaraudeuse est entraînée à travers ladite au moins une couche d'adaptation de forme depuis l'intérieur dudit corps de boîtier pour monter ledit ensemble boîtier scellé sur une surface d'emplacement, en ne laissant aucune espace entre ladite au moins une couche d'adaptation de forme et ladite vis.

2. Ensemble boîtier scellé selon la revendication 1, dans lequel le boulon perce son propre trou quand il est entraîné à travers le corps de boîtier.

3. Ensemble boîtier scellé selon la revendication 1 ou 2, dans lequel ladite au moins une région superficielle comprend une ouverture (107) créée lors de la fabrication dudit corps de boîtier.

4. Ensemble boîtier scellé selon l'une quelconque des revendications précédentes, dans lequel ladite au moins une couche d'adaptation de forme (112) est surmoulée sur ladite au moins une région superficielle.

5. Ensemble boîtier scellé selon l'une quelconque des revendications précédentes, dans lequel ladite au moins une couche d'adaptation de forme (112) est fabriquée dans un matériau ayant une valeur de dureté Shore inférieure à 80 sur une échelle Shore A et supérieure à 60 sur une échelle Shore A.

6. Ensemble boîtier scellé selon l'une quelconque des revendications précédentes, dans lequel ladite au moins une couche d'adaptation de forme (112) est fabriquée dans un matériau ayant un allongement à la traction.

7. Ensemble boîtier scellé selon l'une quelconque des revendications précédentes, dans lequel ladite au moins une couche d'adaptation de forme (112) est fabriquée dans un matériau membre d'un ensemble matériaux comprenant : un caoutchouc de monomère d'éthylène-propylène-diène (classe M, caoutchouc EPDM), un polyuréthane (PU), des élastomères thermoplastiques (TPE), un polyuréthane thermoplastique (TPU) et une silicone de vulcanisation à température ambiante (silicone RTV).

8. Ensemble boîtier scellé selon l'une quelconque des revendications précédentes, dans lequel ledit corps de boîtier (100) est fabriqué dans un matériau ayant une valeur de dureté Shore d'au moins 60 sur une échelle Shore D.

9. Ensemble boîtier scellé selon l'une quelconque des revendications précédentes, dans lequel ledit corps de boîtier (100) est fabriqué dans un matériau membre d'un second ensemble de matériaux comprenant : un alliage de polycarbonate/acrylonitrile butadiène styrène (PC/ABS) et un polycarbonate 540 Chi Mei 5 avec un stabilisant aux ultraviolets (UV).

10. Ensemble boîtier scellé selon l'une quelconque des revendications précédentes, dans lequel ladite au moins une couche d'adaptation de forme (112) est disposée uniquement sur ladite au moins une région superficielle façonnée pour recevoir un boulon (104).

11. Ensemble boîtier scellé selon l'une quelconque des revendications précédentes, dans lequel ledit corps de boîtier (100) comprend une pluralité d'éléments ; et
dans lequel ladite au moins une couche d'adaptation de forme (112) est disposée sur ladite au moins une région superficielle façonnée pour recevoir un boulon (104) et sur une ou plusieurs surfaces reliant deux éléments ou plus de ladite pluralité d'éléments.

12. Procédé (300) de création d'un ensemble boîtier scellé, consistant à :
fournir (301) un corps de boîtier (100) ayant au moins une région superficielle façonnée pour recevoir un boulon (104) pour monter ledit ensemble boîtier scellé sur une surface d'emplacement, de sorte qu'il y ait au moins un espace persistant (108) entre ledit corps de boîtier et ledit boulon quand ledit boulon est amené sur ladite au moins une région superficielle ; et
disposer (302) au moins une couche d'adaptation de forme (112) sur ladite au moins une région superficielle de sorte que ladite au moins une couche d'adaptation de forme se torde pour s'adapter à une forme dudit boulon ;
**caractérisé par** :
ladite au moins une région superficielle est interne audit corps de boîtier et ladite au moins une couche d'adaptation de forme est disposée sur ladite au moins une surface interne dudit corps de boîtier ;
ledit boulon étant une vis autotaraudeuse et ladite vis autotaraudeuse est entraînée à travers ladite au moins une couche d'adaptation de forme depuis l'intérieur dudit corps de boîtier pour monter ledit ensemble boîtier scellé sur une surface d'emplacement, en ne laissant aucune espace entre ladite au moins une couche d'adaptation de forme et ladite vis.

13. Procédé selon la revendication 12, dans lequel ladite étape consistant à disposer (302) au moins une couche d'adaptation de forme (112) sur ladite au moins une surface est effectuée en surmoulant ladite au moins une couche d'adaptation de forme sur ladite au moins une région superficielle.
